# EUROPÄISCHE PATENTSCHRIFT

(11) **EP 4 209 310 B1**
(45) Veröffentlichungstag und Bekanntmachung des Hinweises auf die Patenterteilung: **17.07.2024**
(21) Anmeldenummer: 22176855.9
(22) Anmeldetag: 01.06.2022
(51) Int. Cl.: B25J 9/00

(54) **ANZIEHBARE HILFSVORRICHTUNG MIT VERSTELLBARER UNTERER KÖRPERANBINDUNG**
RETRACTABLE AUXILIARY DEVICE WITH ADJUSTABLE LOWER BODY ATTACHMENT
DISPOSITIF D'AIDE AMOVIBLE À RACCORDEMENT RÉGLABLE DU CORPS INFÉRIEUR

(30) Priorität: 05.01.2022 DE 102022100205
(43) Veröffentlichungstag der Anmeldung: 12.07.2023
(73) Patentinhaber: J. Schmalz GmbH, 72293 Glatten (DE)
(72) Erfinder: Eberhardt, Oliver, 72250 Freudenstadt (DE); Harbauer-Rieß, Christina, 80802 München (DE)
(74) Vertreter: DREISS Patentanwälte PartG mbB

(56) Entgegenhaltungen:
- EP-A1- 2 754 538
- EP-A1- 3 246 285
- WO-A1-2016/187275
- WO-A1-2018/157302
- DE-A1- 102017 112 436
- JP-A- 2015 182 831

## Beschreibung

Die Erfindung betrifft eine anziehbare Hilfsvorrichtung zur Unterstützung beim Anheben und/oder Halten von Lasten durch eine Bedienperson.

Hilfsvorrichtungen können dazu dienen, die Belastungen, welche beim Anheben von Gegenständen auf den Nutzer wirken, entweder direkt in den Boden zu übertragen oder zumindest nur durch ausgewählte Körperbereiche, z.B. einen Hüftbereich einer Bedienperson, zu leiten und so das Gelenk- und Muskelsystem des Nutzers zu entlasten.

Es ist bekannt, Hilfsvorrichtungen als stationäre oder teilmobile Vorrichtungen auszubilden, welche z.B. an einem Arbeitsplatz eines Nutzers installiert sind. Beispielsweise sind stationäre Hebehilfen wie Schlauchheber, Seilbalancer oder Manipulatoren im Stand der Technik beschrieben, mittels welchen Stückgüter aufgenommen und von einer Position zu einer anderen verlagert werden können. Solche Hilfsvorrichtungen sind jedoch in ihrer Flexibilität begrenzt, da sie nicht ohne weiteres an einen neuen Ort verbracht und dort einsatzbereit gemacht werden können.

Es sind auch Hilfsvorrichtungen bekannt, welche als vollständig mobile, vom Nutzer anziehbare Vorrichtungen ausgebildet sind. Solche mobilen Hilfsvorrichtungen weisen üblicherweise eine oder mehrere Körperanbindungen auf, über welche die Hilfsvorrichtung an den Körper einer Bedienperson ankoppelbar ist und über welche Kräfte zwischen Hilfsvorrichtung und Körper übertragen werden können.

Beispielsweise sind sog. Exoskelette bekannt, welche als Hebehilfe zum Anheben von Lasten eingesetzt werden können. Hierbei sind Auslegungen bekannt, bei welchen das Exoskelett im Wesentlichen die gesamte kinematische Kette für den Hebevorgang nachbildet, d.h. die lastragenden Gliedmaßen und Bewegungsfreiheitsgrade des Trägers ("Gelenke" des Exoskeletts) werden vom Exoskelett möglichst genau nachgebildet. Solche Lösungen sind auch als anthropomorphe Exoskelette bekannt. Derartige Exoskelette haben jedoch den Nachteil, dass aus Komplexitätsgründen in der Regel nicht alle Freiheitsgrade des menschlichen Körpers abgebildet werden, wodurch sich Bewegungseinschränkungen und somit ein reduzierter Bedienkomfort ergeben. Zudem sind solche Exoskelette oftmals schwer und daher unhandlich.

Aus der WO 2014/195373 A1 und der WO 2018/157302 A1 sind zudem nichtanthropomorphe Hebehilfen bekannt, welche zueinander bewegliche Stützelemente sowie mehrere, mit den Stützelementen starr verbundene Körperanbindungspunkte aufweisen.

Die bekannten Hilfsvorrichtungen sind in der Regel nur bedingt an die spezifischen anatomischen Gegebenheiten eines Nutzers anpassbar, was sich negativ auf eine Kraftübertragung zwischen Körper und Hilfsvorrichtung auswirken kann. Zudem ist bei den bekannten Hilfsvorrichtungen eine Bewegungsfreiheit für die Bedienperson und somit ein Tragekomfort für den Nutzer regelmäßig eingeschränkt.

Die Erfindung beschäftigt sich mit der Aufgabe, eine Hilfsvorrichtung bereitzustellen, welche einen Nutzer beim Handhaben eines Gegenstands effektiv entlastet und an die anatomischen Gegebenheiten des Nutzers flexibel anpassbar ist. Außerdem soll die Hilfsvorrichtung eine hohe Bewegungsfreiheit für den Nutzer ermöglichen.

Diese Aufgabe wird durch eine Hilfsvorrichtung mit den Merkmalen des Anspruchs 1 gelöst. Die Hilfsvorrichtung ist als anziehbare Hilfsvorrichtung zur Unterstützung beim Anheben und/oder Halten von Lasten durch eine Bedienperson ausgebildet, im Sinne einer von einer Person am Körper tragbaren Vorrichtung zur Unterstützung beim Anheben und/oder Halten von Gegenständen ("körpergetragene Hebehilfe"). Mit anderen Worten ist die Hilfsvorrichtung also insbesondere derart ausgebildet, dass sie von einer Person angezogen werden kann und die Person sich mit der angezogenen Hilfsvorrichtung an einen anderen Ort bewegen kann. Insbesondere kann die Vorrichtung derart ausgebildet sein, dass sie von der Bedienperson rucksackartig anziehbar ist.

Die Hilfsvorrichtung umfasst eine Stützstruktur, welche dazu ausgebildet ist, eine Gewichtskraft und/oder Trägheitskraft einer Last aufzunehmen und diese Kraft in bestimmte Körperbereiche der Bedienperson umzuleiten.

Die Stützstruktur umfasst eine erste (rechte) Stütze und eine von der ersten Stütze separate zweite (linke) Stütze. Die erste und die zweite Stütze weisen jeweils einen Rückenabschnitt und einen Auslegerabschnitt auf. Die Stützen sind derart ausgebildet, dass dann, wenn die Hilfsvorrichtung von der Bedienperson angezogen ist, der Rückenabschnitt posterior, also dorsal bzw. "an der Rückseite" des Körpers, angeordnet ist und sich im Wesentlichen beginnend von der Hüfte cranial entlang der Rückenpartie der Bedienperson erstreckt oder sich beginnend von der Hüfte cranial entlang der Rückenpartie der Bedienperson erstreckt. Dies meint nicht, dass der Rückenabschnitt exakt parallel zu dem Rücken der Bedienperson verlaufen muss. Der Auslegerabschnitt ist derart ausgebildet, dass er sich bei angezogener Hilfsvorrichtung von posterior nach anterior, also ventral bzw. "von der Rückseite zur Vorderseite des Körpers", erstreckt. Bei aufrecht stehender Bedienperson erstreckt sich der Rückenabschnitt insbesondere im Wesentlichen vertikal und der Auslegerabschnitt zumindest abschnittsweise horizontal. Insofern kann der Rückenabschnitt eine Vertikalstütze bilden und der Auslegerabschnitt kann eine Horizontalstütze bilden. Der Rückenabschnitt und/oder der Auslegerabschnitt kann gerade entlang seiner Längserstreckung ausgebildet sein oder aber entlang seiner Längserstreckung zumindest abschnittsweise eine Krümmung aufweisen. Der Auslegerabschnitt kann sich insbesondere an den Rückenabschnitt anschließen. Vorzugsweise erstreckt sich der jeweilige Auslegerabschnitt bei angezogener Hilfsvorrichtung über eine Schulter der Bedienperson. Der Rückenabschnitt und der Auslegerabschnitt können einstückig oder voneinander separat ausgebildet sein. Insbesondere kann der Rückenabschnitt mit dem Auslegerabschnitt beweglich verbunden sein, beispielsweise schwenkbeweglich um eine erste und/oder zweite Auslegerschwenkachse (s.u.). Der Rückenabschnitt und der Auslegerabschnitt sind insbesondere in sich formstabil ausgebildet. Beispielsweise ist es denkbar, dass die Stützen aus Rohrabschnitten und/oder abgelängten Profilteilen gebildet sind. Um die Hilfsvorrichtung an verschiedene Körpergrößen, insbesondere Rückenlängen, anpassen zu können, kann es außerdem vorteilhaft sein, wenn der Rückenabschnitt einer jeweiligen Stütze selbst längenveränderbar ausgebildet sind. Zudem ist es denkbar, dass der Auslegerabschnitt längenveränderbar ausgebildet ist.

Die Hilfsvorrichtung umfasst außerdem eine obere Körperanbindung, insbesondere Oberkörperanbindung, zur Ankopplung der Stützstruktur an einen Oberkörper der Bedienperson. Insbesondere kann die obere Körperanbindung dazu ausgebildet sein, die Stützstruktur an einen Rücken-, Schulter-, und/oder Brustbereich der Bedienperson anzukoppeln.

Die Hilfsvorrichtung umfasst außerdem eine untere Körperanbindung, insbesondere Hüftanbindung, zur Ankopplung der Stützstruktur an einen Becken-, Hüft-, und/oder Lendenbereich der Bedienperson. Die untere Körperanbindung ist insbesondere nicht dazu ausgebildet, die Stützstruktur an untere Extremitäten der Bedienperson, wie z.B. an einen Oberschenkel, Knie oder Unterschenkel, anzukoppeln.

Die obere Körperanbindung und die untere Körperanbindung sind insofern insbesondere derart ausgebildet, dass über sie Kräfte zwischen Körper und Stützstruktur übertragbar sind. Insbesondere kann die obere Körperanbindung dazu ausgebildet sein, solche Kräfte in den Körper einzuleiten, die aus dem Eigengewicht der Stützstruktur, zum statischen Gleichgewicht erforderlichen Stützreaktionen und Führungskräften der Stützenabschnitte resultieren. Die untere Körperanbindung kann insbesondere dazu ausgebildet sein, die sich aus der Handhabung einer Last ergebenden Kräfte und/oder Momente in den Körper einzuleiten. Insbesondere sind die obere und/oder die untere Körperanbindung dazu ausgebildet, die Stützstruktur an einem Körperbereich der Bedienperson festzulegen und somit die Hilfsvorrichtung an dem Körper der Bedienperson zu halten. Insofern sind die obere und/oder die untere Körperanbindung insbesondere derart ausgebildet, dass durch Ankoppeln der Stützstruktur an den Körper mittels der oberen bzw. unteren Körperanbindung die Hilfsvorrichtung von der Bedienperson "angezogen" werden kann. Die obere und/oder die untere Körperanbindung können mit der Stützstruktur lösbar verbunden sein, insbesondere wiederholbar verbindbar und wieder trennbar sein. Vorzugsweise sind die obere Körperanbindung und die untere Körperanbindung voneinander beabstandet angeordnet und, insbesondere ausschließlich, über die Stützstruktur miteinander kraftgekoppelt. Dies hat den Vorteil, dass keine oder nur ein geringer Anteil der unmittelbar aus einer gehaltenen Last resultierenden vertikalen Kräfte in den Oberkörper des Nutzers eingeleitet werden.

Die Hilfsvorrichtung umfasst außerdem eine erste (rechte) Handanbindung zur Anbindung an einen rechten Hand- oder Unterarmbereich der Bedienperson, beispielsweise an ein Handgelenk und/oder eine Handwurzel der Bedienperson. Die erste Handanbindung ist mit der ersten Stütze, insbesondere einem freien Ende des Auslegerabschnitts der ersten Stütze, über eine erste längenveränderbare Verbindungseinrichtung verbunden.

Die Hilfsvorrichtung umfasst außerdem eine zweite (linke) Handanbindung zur Anbindung an einen linken Hand- oder Unterarmbereich der Bedienperson, beispielsweise ein Handgelenk und/oder eine Handwurzel der Bedienperson. Die zweite Handanbindung ist mit der zweiten Stütze, insbesondere einem freien Ende des Auslegerabschnitts der zweiten Stütze, über eine zweite längenveränderbare Verbindungseinrichtung verbunden.

Die Handanbindungen dienen insofern als Bindeglied zwischen der menschlichen Hand und der Hilfsvorrichtung. Über die Handanbindungen und die Verbindungseinrichtungen können Gewichts- und Trägheitskräfte der gehaltenen Last in die Stützstruktur eingeleitet werden und dann über die Körperanbindungen in ausgewählte Körperbereiche der Bedienperson eingeleitet werden. Bei der vorgeschlagenen Hilfsvorrichtung beginnt die Unterstützung insofern insbesondere bereits ab dem Handgelenk der Bedienperson. Vorzugsweise sind die Handanbindungen derart ausgebildet, dass zum Greifen des zu hebenden Gegenstands die menschliche Hand selbst verwendet wird, welche in Ihrer Vielseitigkeit technischen Greifsysteme überlegen ist. Zu diesem Zweck können die Handanbindungen in verschiedener Weise ausgestaltet sein. Denkbar ist beispielsweise eine Ausgestaltung als Manschette, welche die Handwurzel und ggf. auch das Handgelenk der Hand umfängt.

Die längenveränderbaren Verbindungseinrichtungen können insbesondere als Seilzug ausgebildet sein. Insofern kann die erste Handanbindung über einen ersten Seilzug mit der ersten Stütze verbunden sein und die zweite Handanbindung kann über einen zweiten Seilzug mit der zweiten Stütze verbunden sein. Insbesondere kann eine gemeinsame oder jeweilige Antriebseinrichtung zum Antreiben der Seilzüge vorgesehen sein. Auf diese Weise kann eine aktive Unterstützung der Bedienperson, z.B. bei einem Hebevorgang oder bei einem statischen Halten einer Last, erzielt werden. Die wenigstens eine Antriebseinrichtung kann insbesondere an der Stützstruktur gehaltert sein. Insbesondere können die Seile der Seilzüge jeweils über eine, vorzugsweise innerhalb der jeweiligen Stütze verlaufende, Seilführung geführt sein und über eine Seilumlenkeinrichtung aus der Stütze, insbesondere dem Auslegerabschnitt, austreten.

Bei der vorgeschlagenen Hilfsvorrichtung ist die erste Stütze, insbesondere der Rückenabschnitt der ersten Stütze, an einer ersten unteren Verbindungsstelle mit der unteren Körperanbindung verbunden und die zweite Stütze, insbesondere der Rückenabschnitt der zweiten Stütze, ist an einer zweiten unteren Verbindungsstelle mit der unteren Körperanbindung verbunden. Die untere Körperanbindung ist zudem derart ausgebildet, dass eine Relativposition von erster unterer Verbindungsstelle und zweiter unterer Verbindungsstelle veränderbar, insbesondere einstellbar, ist.

Eine solche Ausgestaltung ermöglicht es, die Hilfsvorrichtung an eine spezifische Körperanatomie der Bedienperson, insbesondere in deren Hüftbereich, flexibel anzupassen und somit eine effiziente Krafteinleitung in den Körper zu erzielen. Zudem ist bei einer solchen Hilfsvorrichtung ein Tragekomfort erhöht, sodass die Bedienperson eine Arbeitstätigkeit auch bei angezogener Hilfsvorrichtung möglichst ungestört verrichten kann. Insbesondere umfasst die untere Körperanbindung wenigstens einen Verstellmechanismus, welcher dazu ausgebildet ist, eine Relativposition der ersten unteren Verbindungsstelle und der zweiten unteren Verbindungsstelle zu verändern.

In vorteilhafter Weise kann die untere Körperanbindung derart ausgebildet sein, dass ein Abstand der ersten unteren Verbindungsstelle von der zweiten unteren Verbindungsstelle veränderbar, insbesondere einstellbar, ist. Insbesondere kann die untere Körperanbindung derart ausgebildet sein, dass eine Position der ersten unteren Verbindungsstelle und/oder der zweiten unteren Verbindungsstelle dann, wenn die Hilfsvorrichtung von der Bedienperson angezogen ist, lateral und/oder medial relativ zur Medianebene, also insbesondere orthogonal zur Medianebene, veränderbar ist. Dies ermöglicht es, die untere Körperanbindung an eine Hüftbreite und/oder eine entsprechende Rundung der Hüfte der Bedienperson anzupassen. Hierdurch kann einerseits ein hoher Tragekomfort und andererseits eine effiziente Einleitung von Kräften in den Hüftbereich der Bedienperson erzielt werden. Unter der Medianebene wird im vorliegenden Zusammenhang - wie in der Anatomie üblich - eine, insbesondere lotrechte, Körperebene bezeichnet, welche sich von der vorderen Körperwand zu der hinteren Körperwand erstreckt und den Körper symmetrisch in eine rechte und eine linke Hälfte teilt.

Außerdem kann es vorteilhaft sein, wenn die untere Körperanbindung derart ausgebildet ist, dass dann, wenn die Hilfsvorrichtung von der Bedienperson angezogen ist, eine Position der ersten unteren Verbindungsstelle und/oder der zweiten unteren Verbindungsstelle in Richtung anterior und/oder in Richtung posterior relativ zur Frontalebene, insbesondere orthogonal zur Frontalebene, veränderbar, insbesondere einstellbar, ist. Dies ermöglicht es, einen dorsalen Abstand der ersten und/oder zweiten unteren Verbindungsstelle zu der Frontalebene, also insbesondere einen Abstand der ersten und/oder zweiten unteren Verbindungsstelle zu dem Rücken der Bedienperson, einzustellen und auf diese Weise die Hilfsvorrichtung an eine spezifische Rückenform der Bedienperson anzupassen. Unter der Frontalebene wird im folgenden Zusammenhang - wie in der Anatomie üblich - eine, insbesondere lotrechte, Körperebene bezeichnet, welche den Körper in einen vorderen und einen hinteren Anteil unterteilt.

Im Rahmen einer vorteilhaften Weiterbildung können die erste und die zweite Stütze jeweils gelenkig mit der unteren Körperanbindung verbunden sein. Eine solche gelenkige Verbindung der Stützen mit der unteren Körperanbindung ermöglicht eine Relativbewegung von Stützstruktur und unterer Körperanbindung und erhöht somit eine Bewegungsfreiheit der Bedienperson bei angezogener Hilfsvorrichtung. Insbesondere kann die erste Stütze, vorzugsweise der Rückenabschnitt der ersten Stütze, an der ersten unteren Verbindungsstelle über eine erste untere Gelenkeinrichtung mit der unteren Körperanbindung verbunden sein und die zweite Stütze, vorzugsweise der Rückenabschnitt der zweiten Stütze, kann an der zweiten unteren Verbindungsstelle über eine zweite untere Gelenkeinrichtung mit der unteren Körperanbindung verbunden sein. Besonders vorteilhaft ist es, wenn die erste Stütze und die zweite Stütze über ein Kugelgelenk mit der unteren Körperanbindung verbunden sind.

Im Rahmen einer vorteilhaften Ausgestaltung kann die untere Körperanbindung eine untere Kraftverteilereinrichtung umfassen, welche mit den Stützen, insbesondere mit den Rückenabschnitten der Stützen, verbunden ist. Außerdem kann die untere Körperanbindung eine mit der unteren Kraftverteilereinrichtung über einen oder mehrere Krafteinleitungspunkte oder Krafteinleitungsflächen verbundene Körperanbindungseinrichtung zur Anbindung an einen Körperbereich der Bedienperson, insbesondere an einen Hüft-, Becken- und/oder Lendenbereich der Bedienperson, umfassen. Die untere Kraftverteilereinrichtung ist insbesondere dazu ausgebildet, Kräfte von den Stützen aufzunehmen und in die Körperanbindungseinrichtung umzuleiten, welche die Kräfte dann, insbesondere großflächig und unter Vermeidung von Druckspitzen, in den Körper der Bedienperson einleitet.

Besonders vorteilhaft erweist es sich, wenn die untere Körperanbindungseinrichtung flexibel ausgebildet ist, sodass die Körperanbindungseinrichtung an die spezifischen anatomischen Gegebenheiten der Bedienperson variabel anpassbar ist. Zu diesem Zweck kann die untere Körperanbindungseinrichtung wenigstens ein Textilteil umfassen, insbesondere daraus bestehen. Das wenigstens eine Textilteil kann beispielsweise in Form eines flexiblen Gurtes oder einer Manschette ausgebildet sein. Beispielsweise ist es denkbar, dass die untere Körperanbindungseinrichtung einen oder mehrere Gurte umfasst, welche das Becken und/oder die Hüfte der Bedienperson umfassen und mit entsprechenden Schließelementen ausgestattet sind. Eine solche Ausgestaltung bietet einen hohen Tragekomfort und begünstigt zugleich eine zuverlässige Halterung der Hilfsvorrichtung am Körper der Bedienperson, was eine effiziente Krafteinleitung im Bereich der Hüfte ermöglicht.

Im Rahmen einer vorteilhaften Ausgestaltung kann die untere Kraftverteilereinrichtung einen unteren Grundkörper aufweisen, an welchem die Stützen, insbesondere über die unteren Gelenkeinrichtungen, angeordnet sind. Vorzugsweise erstreckt sich der untere Grundkörper zwischen der ersten Stütze und der zweiten Stütze, insbesondere zwischen dem Rückenabschnitt der ersten Stütze und dem Rückenabschnitt der zweiten Stütze. Der Grundkörper dient insofern als unteres Verbindungsglied zwischen der ersten und der zweiten Stütze. Der Grundkörper kann ein- oder mehrteilig ausgebaut aufgebaut sein.

Vorzugsweise umfasst die untere Körperanbindung, insbesondere der untere Grundkörper, einen ersten unteren Verstellmechanismus, welcher dazu ausgebildet ist, einen Abstand der unteren Verbindungsstellen zu verändern, insbesondere einzustellen. Insbesondere kann der erste untere Verstellmechanismus dazu ausgebildet sein, eine Position der unteren Verbindungsstellen bei angezogener Hilfsvorrichtung lateral und/oder medial relativ zur Medianebene zu verändern. Beispielsweise ist es denkbar, dass die Stützen jeweils an einer Zahnstange gehaltert sind, welche über einen Zahnstangenmechanismus lateral und medial verschiebbar an dem Grundkörper gehaltert ist.

Außerdem kann es vorteilhaft sein, wenn die untere Körperanbindung einen zweiten unteren Verstellmechanismus umfasst, welcher dazu ausgebildet ist, eine Position der unteren Verbindungsstellen in Richtung anterior (ventral) und in Richtung posterior (dorsal) relativ zu der Frontalebene zu verändern. Beispielsweise ist es denkbar, dass die erste und die zweite Stütze, insbesondere die erste und die zweite untere Gelenkeinrichtung, jeweils über eine Schwenkeinrichtung um eine Schwenkachse schwenkbeweglich an dem Grundkörper gehaltert sind. Insbesondere ist die Schwenkachse bei angezogener Hilfsvorrichtung und aufrechter Körperposition orthogonal zur Transversalebene orientiert. Unter der Transversalebene wird im folgenden Zusammenhang - wie in der Anatomie üblich - eine Ebene bezeichnet, welche quer, also orthogonal zur Längsachse der Bedienperson, insbesondere horizontal, durch den Körper verläuft und somit den Körper der Bedienperson in einen oberen und einen unteren Anteil teilt. Die Schwenkeinrichtung kann insofern insbesondere dazu ausgebildet sein, eine Position der unteren Gelenkeinrichtungen in Richtung anterior oder in Richtung posterior relativ zur Frontalebene zu verändern. Beispielsweise können die unteren Gelenkeinrichtungen jeweils an einem Schwenkflügel drehfest gehaltert sein, welcher wiederum an dem unteren Grundkörper schwenkbeweglich um die Schwenkachse gehaltert, insbesondere gelagert, ist. Der erste und/oder der zweite untere Verstellmechanismus können vorzugsweise über ein Bedienelement derart betätigbar sein, dass die Bedienperson bei angezogener Hilfsvorrichtung eigenständig eine Position der Verbindungsstellen einstellen und bei Bedarf verändern kann.

Im Rahmen einer vorteilhaften Ausgestaltung kann die untere Kraftverteilereinrichtung eine erste, insbesondere anatomisch geformte, Hüftschale zur Anlage an einen rechten Hüftbereich der Bedienperson und eine zweite, insbesondere anatomisch geformte, Hüftschale zur Anlage an einen linken Hüftbereich der Bedienperson umfassen. Die Hüftschalen sind insbesondere an der flexiblen Körperanbindungseinrichtung, vorzugsweise an dem wenigstens einen Textilteil, gehaltert und über diese miteinander kraftgekoppelt. Insbesondere ist die erste Stütze, insbesondere über die erste untere Gelenkeinrichtung, mit der ersten Hüftschale verbunden und die zweite Stütze, insbesondere über die zweite untere Gelenkseinrichtung, mit der zweiten Hüftschale. Die Hüftschalen sind insofern insbesondere dazu ausgebildet, Handhabungskräfte von den Stützen aufzunehmen und, insbesondere großflächig und unter Vermeidung von Druckspitzen, in den Hüftbereich der Bedienperson einzuleiten. Eine solche Ausgestaltung der unteren Kraftverteilereinrichtung mit Hüftschalen ermöglicht eine besonders effektive Krafteinleitung in den Körper und zeichnet sich durch einen besonders hohen Tragekomfort aus.

Für eine effiziente Krafteinleitung kann es außerdem vorteilhaft sein, wenn die Hüftschalen derart ausgebildet sind, dass die Hüftschalen dann, wenn die Hilfsvorrichtung von der Bedienperson angezogen ist, derart in einen Leistenbereich der Bedienperson ragen, dass nach dorsal, also in Richtung des Rückens, in den Körper gerichtete, insbesondere horizontale, Kräfte über die Hüftschalen in den Körper der Bedienperson einleitbar sind.

Um die untere Körperanbindung an einen spezifischen Körperbau der Bedienperson individuell anpassen zu können, kann es ferner vorteilhaft sein, wenn die erste und die zweite Hüftschale, insbesondere entlang der Hüftkontur, verschiebbar an der flexiblen Körperanbindungseinrichtung, insbesondere dem wenigstens einen Textilteil, gehaltert sind. Insbesondere können die Hüftschalen derart an der flexiblen Körperanbindungseinrichtung gehaltert sein, dass durch Verschieben der ersten und/oder der zweiten Hüftschale relativ zu der flexiblen Körperanbindungseinrichtung ein Abstand der unteren Verbindungsstellen und somit ein Abstand der Stützen relativ zueinander veränderbar, insbesondere einstellbar, ist. Insbesondere können die Hüftschalen derart an der unteren Körperanbindungseinrichtung verschiebbar gehaltert sein, dass durch Verschieben der Hüftschalen eine Position der unteren Verbindungsstellen lateral und medial relativ zur Medianebene und/oder in Richtung anterior und in Richtung posterior relativ zur Frontalebene veränderbar, insbesondere einstellbar, ist.

Im Rahmen einer vorteilhaften Weiterbildung kann die untere Kraftverteilereinrichtung außerdem wenigstens eine Lordosenstütze umfassen. Die wenigstens eine Lordosenstütze kann dann insbesondere an der unteren Körperanbindungseinrichtung, insbesondere dem wenigstens einen Textilteil, gehaltert sein und über diese mit der ersten und der zweiten Hüftschale kraftgekoppelt sein. Hierdurch können Handhabungskräfte auf zusätzliche Körperbereiche verteilt werden. Zusätzlich zu einer Kraftübertragung über die untere Körperanbindungseinrichtung kann die wenigstens eine Lordosenstütze mit den Hüftschalen jeweils über wenigstens ein elastisches Element, insbesondere elastisches Band, verbunden sein, welches zwischen Lordosenstütze und Hüftschalen gespannt ist. In Abhängigkeit einer Steifigkeit des wenigstens einen elastischen Elements kann eingestellt werden, wie viel Kraft in die Lordosenstütze eingeleitet wird.

Es ist denkbar, dass die Stützstruktur nur über eine der beiden Stützen mit der oberen Körperanbindung gekoppelt ist. Für eine effiziente Krafteinleitung erweist es sich jedoch als vorteilhaft, wenn die erste Stütze an einer ersten oberen Verbindungsstelle mit der oberen Körperanbindung verbunden ist und wenn die zweite Stütze an einer zweiten oberen Verbindungsstelle mit der oberen Körperanbindung verbunden ist. Im Rahmen einer vorteilhaften Weiterbildung können die erste Stütze und die zweite Stütze jeweils gelenkig mit der oberen Körperanbindung verbunden sein. Insbesondere kann die erste Stütze an der ersten oberen Verbindungsstelle über eine erste obere Gelenkeinrichtung und die zweite Stütze an der zweiten oberen Verbindungsstelle über eine zweite obere Gelenkeinrichtung mit der oberen Körperanbindung verbunden sein. Eine solche Ausgestaltung erhöht die Bewegungsfreiheit der Bedienperson weiter. Zudem ermöglicht eine gelenkige Verbindung der Stützen mit der oberen Körperanbindung einen Abstand der unteren Verbindungsstellen unabhängig von einem Abstand der oberen Verbindungsstellen einzustellen, insbesondere dann, wenn beide Stützen mit der oberen Körperanbindung verbunden sind. Beispielsweise können die Stützen relativ zur Medianebene und zur Frontalebene geneigt werden. Besonders vorteilhaft erweist es sich, wenn die erste obere Gelenkeinrichtung und die zweite obere Gelenkeinrichtung jeweils mindestens zwei, vorzugsweise mindestens drei, Gelenkfreiheitsgrade aufweisen.

Um die obere Körperanbindung flexibel an eine Rückenform der Bedienperson anpassen zu können, kann es außerdem vorteilhaft sein, wenn die obere Körperanbindung derart ausgebildet ist, dass eine Relativposition von erster oberer Verbindungsstelle und zweiter oberer Verbindungsstelle veränderbar, insbesondere einstellbar, ist. Insbesondere kann die obere Körperanbindung derart ausgebildet sein, dass dann, wenn die Hilfsvorrichtung von der Bedienperson angezogen ist, eine Position der ersten oberen Verbindungsstelle und/oder der zweiten oberen Verbindungsstelle lateral und/oder medial relativ zur Medianebene veränderbar, insbesondere einstellbar, ist. Dies ermöglicht es, die obere Körperanbindung an eine Rückenbreite anzupassen und somit eine für die Bedienperson optimale Passform der Hilfsvorrichtung einzustellen. Die obere Körperanbindung kann außerdem derart ausgebildet sein, dass dann, wenn die Hilfsvorrichtung von der Bedienperson angezogen ist, eine Position der ersten oberen Verbindungsstelle und/oder der zweiten oberen Verbindungsstelle in Richtung anterior und/oder in Richtung posterior relativ zur Frontalebene veränderbar, insbesondere einstellbar, ist. Dies ermöglicht es, einen Abstand der Stützen zu dem Rücken der Bedienperson einzustellen.

Besonders vorteilhaft kann es sein, wenn die obere und die untere Körperanbindung derart ausgebildet sind, dass eine Relativposition der oberen Verbindungsstellen und eine Relativposition der unteren Verbindungsstellen voneinander unabhängig veränderbar, insbesondere einstellbar, ist. Eine solche Ausgestaltung ermöglicht es, Kombinationen verschiedener Anatomien abzubilden, z.B. breite Schultern in Kombination mit schmalen Hüften. Dies kann insbesondere durch Kombination der Verstellbarkeit von oberer und/oder unterer Körperanbindung mit der gelenkigen Verbindung der Stützen mit der unteren und/oder oberen Körperanbindung begünstigt werden.

Um ein unerwünschtes Verstellen der Hilfsvorrichtung nach erfolgreicher Anpassung an die Anatomie der Bedienperson, bspw. während eines Arbeitsprozesses, zu verhindern, kann es außerdem vorteilhaft sein, wenn die Hilfsvorrichtung eine Feststelleinrichtung zur Feststellung einer Relativposition der ersten und zweiten unteren Verbindungsstellen und/oder eine Feststelleinrichtung zur Feststellung einer Relativposition der ersten und zweiten oberen Verbindungsstellen umfasst. Insbesondere können der erste und/oder der zweite untere Verstellmechanismus feststellbar ausgebildet sein, bspw. über einen Rastmechanismus.

Im Rahmen einer vorteilhaften Ausgestaltung kann der Auslegerabschnitt der ersten Stütze schwenkbar mit dem Rückenabschnitt der ersten Stütze verbunden sein und der Auslegerabschnitt der zweiten Stütze kann schwenkbar mit dem Rückenabschnitt der zweiten Stütze verbunden sein. Vorzugsweise ist der jeweilige Auslegerabschnitt um eine zu der Längsachse des Rückenabschnitts parallele erste, insbesondere vertikale, Auslegerschwenkachse schwenkbar an dem jeweiligen Rückenabschnitt angeordnet. Dies ermöglicht es, den Auslegerabschnitt bei angezogener Hilfsvorrichtung nach links oder rechts zu verschwenken, insbesondere ohne, dass der Rückenabschnitt mit verschwenkt werden muss.

Alternativ oder zusätzlich kann der jeweilige Auslegerabschnitt um eine zu der Längsachse des Rückenabschnitts und zu einer Längsachse des Auslegerabschnitts orthogonale, insbesondere horizontale, zweite Auslegerschwenkachse schwenkbar an dem Rückenabschnitt angeordnet sein. Dies ermöglicht es, den Auslegerabschnitt "nach oben" oder "nach unten" zu verschwenken, insbesondere ohne, dass der Rückenabschnitt mit verschwenkt werden muss.

Die Erfindung wird im Folgenden anhand der Figuren näher erläutert. Es zeigen:
Fig. 1 vereinfachte schematische Darstellung einer Ausgestaltung einer Hilfsvorrichtung;
Fig. 2 vereinfachte schematische Darstellung zur Erläuterung eines Benutzungszustands der Hilfsvorrichtung;
Fig. 3 vereinfachte schematische Darstellung einer unteren Körperanbindung der Hilfsvorrichtung in einer Vorderansicht;
Fig. 4 vereinfachte schematische Darstellung einer Baugruppe der unteren Körperanbindung gemäß Fig. 3 in einer perspektivischen Rückansicht;
Fig. 5 vereinfachte schematische Darstellung der Hilfsvorrichtung in einer Seitenansicht;
Fig. 6 skizzierte Darstellung einer Ausgestaltung der unteren Körperanbindung in einer perspektivischen Rückansicht;
Fig. 7a-c skizzierte Darstellungen einer weiteren Ausgestaltung der unteren Körperanbindung in verschiedenen Ansichten;
Fig. 8 skizzierte Darstellung der unteren Körperanbindung gemäß Fig. 7a-c in einer Draufsicht; und
Fig. 9 vereinfachte schematische Darstellung der Hilfsvorrichtung zur Erläuterung der Verstellbarkeit.

In der nachfolgenden Beschreibung sowie in den Figuren sind für identische oder einander entsprechende Merkmale jeweils dieselben Bezugszeichen verwendet.

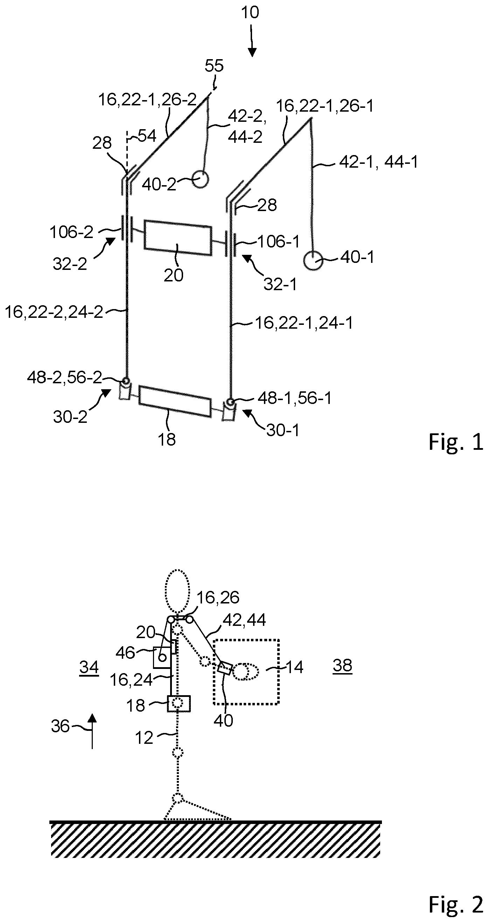

Die Figur 1 zeigt in vereinfachter schematischer Darstellung eine anziehbare Hilfsvorrichtung, welche insgesamt mit dem Bezugszeichen 10 bezeichnet ist. Die Hilfsvorrichtung 10 ist dazu ausgebildet, eine Bedienperson 12 beim Anheben und/oder Tragen einer Last 14 zu unterstützen (vgl. Fig. 2). Wie nachfolgend noch im Detail erläutert, ist die Hilfsvorrichtung 10 im Sinne einer mobilen Vorrichtung ausgebildet, welche von der Bedienperson 12 angezogen und transportiert werden kann.

Die Hilfsvorrichtung 10 umfasst eine Stützstruktur 16, welche dazu ausgebildet ist, eine Tragkraft, insbesondere die Gewichtskraft und/oder Trägheitskraft einer von der Bedienperson 12 gehaltenen Last 14, aufzunehmen und in bestimmte Körperbereiche der Bedienperson 12 abzuleiten. Zu diesem Zweck umfasst die Hilfsvorrichtung 10 außerdem eine untere Körperanbindung 18 zur Ankopplung der Stützstruktur 16 an einen Becken-, Hüft- und/oder Lendenbereich der Bedienperson 12 und eine obere Körperanbindung 20 zur Ankopplung der Stützstruktur 16 an einen Oberkörper der Bedienperson 12 (vgl. Fig. 1 und 2).

Die Stützstruktur 16 umfasst eine erste (rechte) Stütze 22-1 und eine zweite (linke) Stütze 22-2. Wie aus Fig. 1 ersichtlich, umfassen die Stützen 22-1, 22-2 jeweils einen Rückenabschnitt 24-1, 24-2 und einen Auslegerabschnitt 26-1, 26-2. In dem dargestellten Beispiel sind die Rückenabschnitte 24-1, 24-2 mit den Auslegerabschnitten 26-1, 26-2 über nur schematisch angedeutete Stützenverbinder 28 miteinander verbunden. Es ist auch denkbar, dass die Rückenabschnitte 24-1, 24-2 mit den entsprechenden Auslegerabschnitten 26-1, 26-2 einstückig ausgebildet sind. Es ist auch denkbar, dass die Auslegerabschnitte 26-1, 26-2 über entsprechende Auslegergelenke (nicht dargestellt) schwenkbar mit den entsprechenden Rückenabschnitten 24-1, 24-2 verbunden sind. Beispielsweise kann das Auslegergelenk jeweils derart ausgebildet sein, dass der jeweilige Auslegerabschnitt 26-1, 26-2 um eine zu der Längsachse 54 des Rückenabschnitts 24-1, 24-2 parallele erste, insbesondere vertikale, Auslegerschwenkachse schwenkbar ist und/oder um eine zu der Längsachse 54 des Rückenabschnitts 24-1, 24-2 und zu einer Längsachse 55 des Auslegerabschnitts 26-1, 26-2 orthogonale, insbesondere horizontale, zweite Auslegerschwenkachse, schwenkbar ist.

Wie in Fig. 1 schematisch dargestellt, ist die erste Stütze 22-1 an einer ersten unteren Verbindungsstelle 30-1 mit der unteren Körperanbindung 18 verbunden und an einer ersten oberen Verbindungsstelle 32-1 mit der oberen Körperanbindung 20 verbunden. Die zweite Stütze 22-2 ist dementsprechend an einer zweiten unteren Verbindungsstelle 30-2 mit der unteren Körperanbindung 18 verbunden und an einer zweiten oberen Verbindungsstelle 32-2 mit der oberen Körperanbindung 20 verbunden (nachfolgend noch im Detail erläutert).

Wie aus Fig. 2 ersichtlich, ist die Hilfsvorrichtung 10 derart ausgebildet, dass dann, wenn die Hilfsvorrichtung 10 von der Bedienperson 12 angezogen ist, die Rückenabschnitte 24-1, 24-2 posterior, also an einer Rückseite 34 der Bedienperson 12, angeordnet sind und sich im Wesentlichen cranial (vgl. Pfeil 36 in Fig. 2) von der unteren Körperanbindung 18 entlang der Rückenpartie der Bedienperson 12 erstreckt (in Fig. 2 beispielhaft vertikal). Die Auslegerabschnitte 26-1, 26-2 sind derart ausgebildet, dass sie sich bei angezogener Hilfsvorrichtung 10 von posterior nach anterior, also von der Rückseite 34 zu einer Vorderseite 38 der Bedienperson 12 hin, erstrecken, insbesondere über eine Schulter der Bedienperson.

In dem dargestellten Beispiel sind die Rückenabschnitte 24-1, 24-2 und die Auslegerabschnitte 26-1, 26-2 orthogonal zueinander ausgebildet. Bei nicht dargestellten Ausgestaltungen sind jedoch auch andere Ausgestaltungen denkbar. Beispielsweise ist es denkbar, dass sich der jeweilige Auslegerabschnitt 26-1, 26-2 an den Rückenabschnitt 24-1, 24-2 anschließt und eine Krümmung derart aufweist, dass sich der Auslegerabschnitt 26-1, 26-2 bei angezogener Hilfsvorrichtung 10 von anterior nach posterior erstreckt.

Die Hilfsvorrichtung 10 umfasst außerdem eine erste Handanbindung 40-1 zur Anbindung an einen rechten Hand-oder Unterarmbereich der Bedienperson 12 und eine zweite Handanbindung 40-2 zur Anbindung an einen linken Hand-oder Unterarmbereich der Bedienperson 12. Wie in Fig. 1 schematisch dargestellt, ist die erste Handanbindung 40-1 mit dem Auslegerabschnitt 26-1 der ersten Stütze 22-1 über eine erste, insbesondere längenveränderbare, Verbindungseinrichtung 42-1 verbunden. Die zweite Handanbindung 40-2 ist mit dem Auslegerabschnitt 26-2 der zweiten Stütze 22-2 über eine zweite, insbesondere längenveränderbare, Verbindungseinrichtung 42-2 verbunden. Beispielhaft und bevorzugt kann es sich bei der Verbindungseinrichtung 42-1, 42-2 über um einen angetriebenen Seilzug 44-1, 44-2 handeln. Dann kann die Hilfsvorrichtung 10 außerdem eine gemeinsame oder für jeden Seilzug 44-1, 44-2 eigene Antriebseinrichtung 46 aufweisen, welche vorzugsweise an der Stützstruktur 16 gehaltert ist (vgl. Fig. 2). Die Hilfsvorrichtung 10 kann dann für jeden Seilzug 44-1, 44-2 eine, insbesondere in die Stützen 22 integrierte, Seilführung (nicht dargestellt) umfassen, welche dazu ausgebildet ist, das Seil von der Antriebseinrichtung 46 zu der Handanbindung 40-1, 40-2 zu führen. Insbesondere kann dann das Seil an einem freien Ende des Auslegerabschnitts 26-1, 26-2 über eine Seilumlenkeinrichtung (nicht dargestellt) austreten.

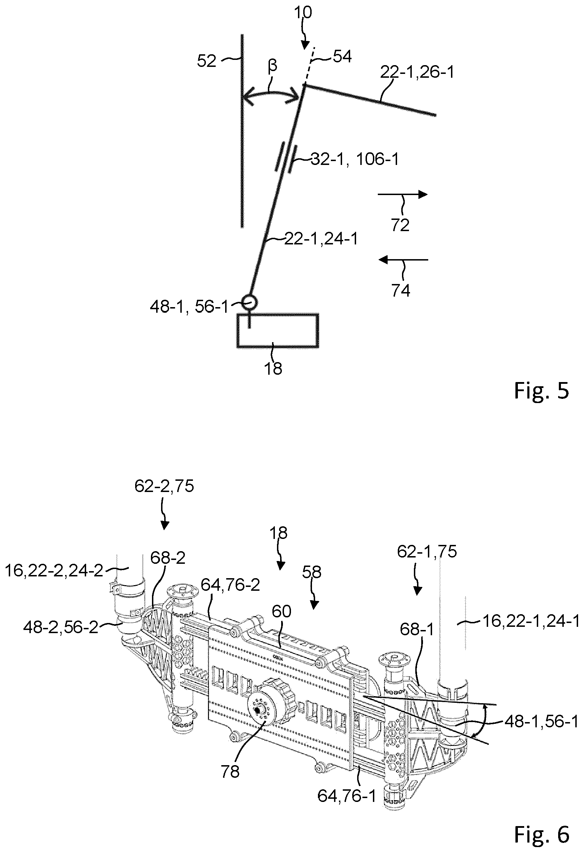

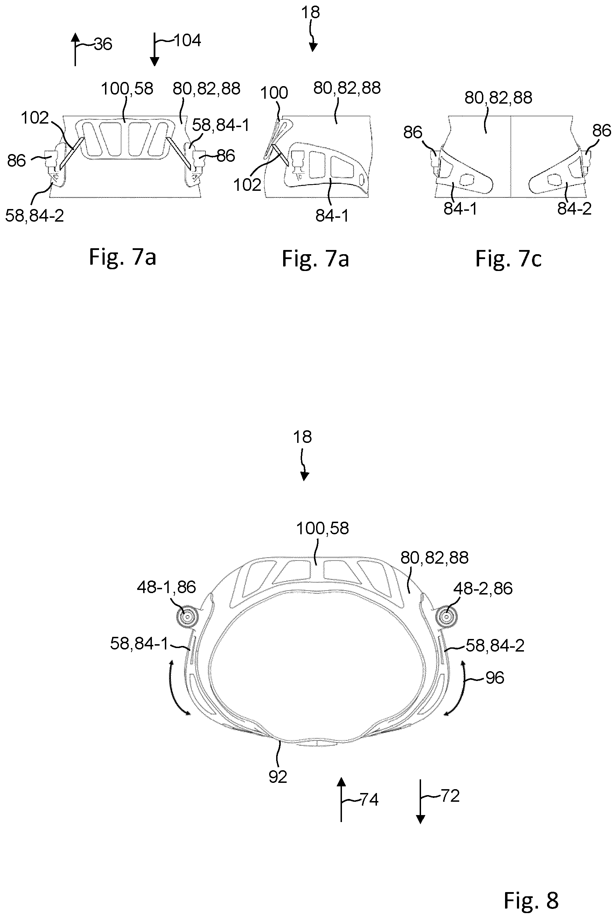

Wie in Fig. 1 schematisch dargestellt, ist die erste Stütze 22-1 an der ersten unteren Verbindungsstelle 30-1 beispielhaft über eine optionale erste untere Gelenkeinrichtung 48-1 mit der unteren Körperanbindung 18 verbunden und die zweite Stütze 22-2 ist an der zweiten unteren Verbindungsstelle 30-2 über eine optionale zweite untere Gelenkeinrichtung 48-2 mit der unteren Körperanbindung 18 verbunden. Die unteren Gelenkeinrichtungen 48-1, 48-2 sind beispielhaft jeweils derart ausgebildet, dass bei angezogener Hilfsvorrichtung 10 ein Neigungswinkel α der jeweiligen Stütze 22-1, 22-2 relativ zu der Medianebene 50 (vgl. Fig. 7) und ein Neigungswinkel β der jeweiligen Stütze 22-1, 22-2 relativ zu der Frontalebene 52 (vgl. Fig. 5) veränderbar ist. Darüber hinaus können die unteren Gelenkeinrichtungen 48-1, 48-2 derart ausgebildet, dass der jeweilige Rückenabschnitt 24-1, 24-2 der jeweiligen Stütze 22-1, 22-2 um seine Längsachse 54 schwenkbar an der unteren Körperanbindung 18 gehaltert ist. In dem dargestellten Beispiel sind die unteren Gelenkeinrichtungen 48-1, 48-2 als Kugelgelenke 56-1, 56-2 ausgebildet.

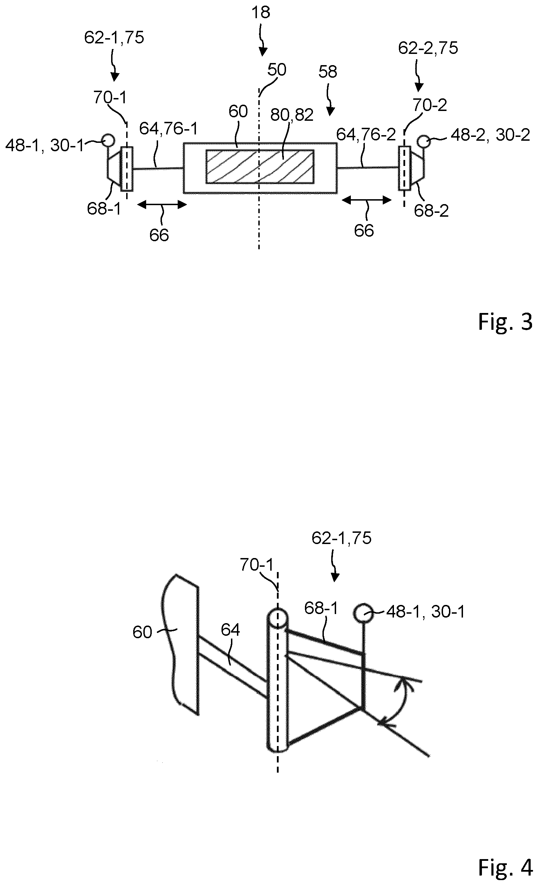

Die Figur 3 zeigt eine vereinfachte schematische Darstellung einer Ausgestaltung der unteren Körperanbindung 18. Wie aus Fig. 3 ersichtlich, umfasst die untere Körperanbindung 18 einen Grundkörper 60, welcher zwischen den Rückenabschnitten 24-1, 24-2 angeordnet ist. Wie in Fig. 4 dargestellt, sind die Stützen 22-1, 22-2 über die unteren Gelenkeinrichtungen 48-1, 48-2 an dem Grundkörper 60 gehaltert, beispielhaft über eine nachfolgend noch im Detail beschriebene Schwenkeinrichtung 62. Der Grundkörper 60 ist Teil einer unteren Kraftverteilereinrichtung 58, welche dazu ausgebildet ist, Kräfte von den Stützen 22-1, 22-2 aufzunehmen und flächig in die Körperanbindung 18 einzuleiten.

Der Grundkörper 60 umfasst einen ersten unteren Verstellmechanismus 64, welcher dazu ausgebildet ist, einen Abstand der unteren Gelenkeinrichtungen 48-1, 48-2 zu dem Grundkörper 60 und somit einen Abstand der Stützen 22-1, 22-2 voneinader zu verändern, insbesondere einzustellen. Bei angezogener Hilfsvorrichtung 10 ist insofern eine Position der ersten unteren Verbindungsstelle 30-1 und der zweiten unteren Verbindungsstelle 30-2 medial bzw. lateral zur Medianebene 50 veränderbar, insbesondere einstellbar (in Fig. 3 durch die Doppelpfeile 66 dargestellt). Beispielhaft kann der erste Verstellmechanismus 64 eine linke und eine rechte Zahnstangeneinrichtung 76-1, 76-2 umfassen, über welche die Stützen 22-1, 22-2, insbesondere über die Schwenkeinrichtungen 62-1, 62-2, verschieblich an dem Grundkörper 60 gehaltert sind (vgl. Fig. 6). Der erste untere Verstellmechanismus 64 kann beispielhaft über eine untere Bedieneinheit 78 betätigbar sein.

Dem dargestellten Beispiel sind die Stützen 22-1, 22-2, insbesondere über die unteren Gelenkeinrichtungen 48-1, 48-2, jeweils über eine vorstehend bereits erwähnte Schwenkeinrichtung 62-1, 62-2 an dem unteren Grundkörper 60 gehaltert. Wie in Fig. 4 beispielhaft gezeigt, sind die unteren Gelenkeinrichtungen 48-1, 48-2 beispielhaft jeweils an einem Schwenkflügel 68-1, 68-2 gehaltert, welcher schwenkbeweglich um eine Schwenkachse 70-1, 70-2 an dem unteren Grundkörper 60 gehaltert ist. Bei angezogener Hilfsvorrichtung 10 ist die Schwenkachse 70-1, 70-2 insbesondere orthogonal zur Transversalebene (in aufrechter Körperposition) orientiert. Die Schwenkeinrichtung 62 ermöglicht es, eine Position der unteren Verbindungsstellen 30-1, 30-2 nach anterior (ventral, vgl. Pfeil 72 in Fig. 5) oder nach posterior (dorsal, vgl. Pfeil 74 in Fig. 5) relativ zur Frontalebene 52 zu verändern. Die Schwenkeinrichtungen 62-1, 62-2 bilden insofern einen zweiten unteren Verstellmechanismus 75.

Eine beispielhafte Ausgestaltung des unteren Grundkörpers 60 mit erstem und zweitem unterem Verstellmechanismus 64, 75 ist in Figur 6 gezeigt.

Wie in Fig. 3 lediglich abschnittsweise angedeutet, umfasst die untere Körperanbindung 18 außerdem eine flexible untere Körperanbindungseinrichtung 80 zur Anbindung an einen Hüft-, Becken-, und/oder Lendenbereich der Bedienperson 12. Die untere Körperanbindungseinrichtung 80 umfasst insbesondere einen Textilteil 82, über welches die Hilfsvorrichtung 10 mit dem Körper verbunden ist. Beispielsweise kann das Textilteil 82 in Form eines Hüftgurts (nicht dargestellt) ausgebildet sein, welcher einen Hüftbereich der Bedienperson 12 umfasst.

Die Figuren 7a bis 8 zeigen eine weitere beispielhafte Ausgestaltung der unteren Körperanbindung 18. Wie aus Fig. 7c ersichtlich, ist die untere Kraftverteilereinrichtung 58 bei dieser Ausgestaltung durch zwei, vorzugsweise anatomisch geformte, Hüftschalen 84-1, 84-2 gebildet. An den Hüftschalen 84-1, 84-2 sind die Stützen 22-1, 22-2, insbesondere über die optionalen unteren Gelenkeinrichtungen 48-1, 48-2, gehaltert. Beispielsweise ist es denkbar, dass die Hüftschalen 84-1, 84-2 eine jeweilige Kugelaufnahme 86 der Kugelgelenke 56-1, 56-2 haltern. Die Hüftschalen 84-1, 84-2 sind an einem Textilteil 82 angeordnet, welches beispielhaft als Hüftband 88 ausgebildet ist.

Wie aus Fig. 7c und 8 ersichtlich, sind die Hüftschalen 84-1, 84-2 beispielhaft und bevorzugt derart ausgebildet und an dem Textilteil 82 gehaltert, dass die Hüftschalen 84-1, 84-2 bei angezogener Hilfsvorrichtung 10 derart ventral (vgl. Pfeil 72 in Fig. 8) in einen Leistenbereich 92 der Bedienperson 12 ragen, dass nach dorsal (vgl. Pfeil 74 in Fig. 7) gerichtete Kräfte über die Hüftschalen 84-1, 84-2 in den Körper der Bedienperson 12 einleitbar sind. Die Hüftschalen 84-1, 84-2 sind vorzugsweise derart verschiebbar an dem Textilteil 82 gehaltert, dass durch Verschieben der Hüftschalen 84-1, 84-2 relativ zu dem Textilteil 82 eine Position der unteren Verbindungsstellen 30-1, 30-2 sowohl lateral bzw. medial relativ zur Medianebene 50 als auch anterior bzw. posterior relativ zur Frontalebene 52 veränderbar ist (in Fig. 8 durch den Doppelpfeil 96 angedeutet).

In dem dargestellten Beispiel umfasst die untere Körperanbindung 18 außerdem eine optionale Lordosenstütze 100, welche Teil der unteren Kraftverteilereinrichtung 58 ist. Die Lordosenstütze 100 ist an dem Textilteil 82 gehaltert und über dieses mit den Hüftschalen 84-1, 84-2 kraftgekoppelt. Optional kann die Lordosenstütze 100 zusätzlich über ein oder mehrere elastische Bänder 102 mit den Hüftschalen 84-1, 84-2 verbunden sein (vgl. Fig. 7a). Die Lordosenstütze 100 ist beispielhaft und bevorzugt derart verschiebbar an dem Textilteil 82 gehaltert, dass eine Position der Lordosenstütze 100 nach cranial (vgl. Pfeil 36 in Fig. 7a) bzw. caudal (vgl. Pfeil 104 in Fig. 7a) veränderbar, insbesondere einstellbar ist.

Wie in Fig. 1 angedeutet, kann die erste Stütze 22-1 an der ersten oberen Verbindungsstelle 32-1 optional über eine erste obere Gelenkeinrichtung 106-1 mit der oberen Körperanbindung 20 verbunden sein und die zweite Stütze 22-2 kann an der zweiten oberen Verbindungsstelle 32-2 optional über eine zweite obere Gelenkeinrichtung 106-2 mit der oberen Körperanbindung 20 verbunden sein. Insbesondere weisen die oberen Gelenkeinrichtungen 106-1, 106-2 jeweils drei Gelenkfreiheitsgrade auf.

Außerdem kann die obere Körperanbindung einen ersten Verstellmechanismus (nicht dargestellt) umfassen, welcher dazu ausgebildet ist, einen Abstand zwischen erster und zweiter oberer Gelenkeinrichtung 106-1, 106-2 zu verändern. Beispielsweise ist es denkbar, dass die obere Körperanbindung 20 einen ähnlichen Zahnstangenmechanismus aufweist wie die untere Körperanbindung 18 (vgl. Fig. 6 und obige Beschreibung). Die obere Körperanbindung 20 kann außerdem einen zweiten oberen Verstellmechanismus (nicht dargestellt) umfassen, welcher dazu ausgebildet ist, eine Position der oberen Gelenkeinrichtungen 106-1, 106-2 nach anterior (vgl. Pfeil 72 in Fig. 5) bzw. posterior (vgl. Pfeil 74 in Fig. 5) relativ zur Frontalebene 52 verändern.

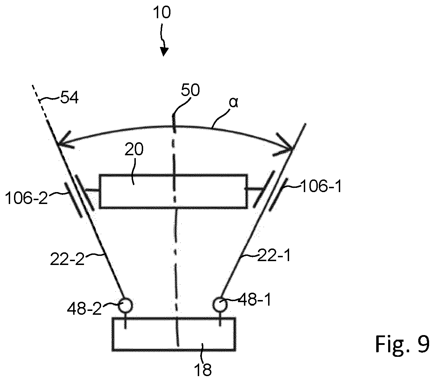

Eine besonders vorteilhafte Wirkung der Hilfsvorrichtung 10 kann sich bei einem Zusammenspiel von unterer und oberer Körperanbindung 18, 20 ergeben. Wie in Fig. 9 schematisch dargestellt, ist es bspw. möglich, Körperanatomien mit schmaler Hüfte und breitem Rücken nachzubilden.

## Patentansprüche

1. Anziehbare Hilfsvorrichtung (10) zur Unterstützung beim Anheben und/oder Halten von Lasten (14) durch eine Bedienperson (12), umfassend
- eine Stützstruktur (16) mit einer ersten Stütze (22-1) und einer zweiten Stütze (22-2), wobei die erste Stütze (22-1) und die zweite Stütze (22-2) jeweils einen Rückenabschnitt (24-1, 24-2) und einen Auslegerabschnitt (26-1, 26-2) derart aufweisen, dass dann, wenn die Hilfsvorrichtung (10) von der Bedienperson (12) angezogen ist, der Rückenabschnitt (24-1, 24-2) posterior angeordnet ist und im Wesentlichen entlang der Rückenpartie der Bedienperson (12) verläuft und der Auslegerabschnitt (26-1, 26-2) sich von posterior nach anterior erstreckt;
- eine untere Körperanbindung (18) zur Ankopplung der Stützstruktur (16) an einen Becken-, Hüft- und/oder Lendenbereich der Bedienperson (12);
- eine obere Körperanbindung (20) zur Ankopplung der Stützstruktur (16) an einen Oberkörper der Bedienperson (12), insbesondere an einen Rücken-, Schulter-, und/oder Brustbereich;
- eine erste Handanbindung (40-1) zur Anbindung an einen rechten Hand- oder Unterarmbereich der Bedienperson (12), wobei die erste Handanbindung (40-1) mit der ersten Stütze (22-1) über eine erste längenveränderbare Verbindungseinrichtung (42-1) verbunden ist;
- eine zweite Handanbindung (40-2) zur Anbindung an einen linken Hand- oder Unterarmbereich der Bedienperson (12), wobei die zweite Handanbindung (40-2) mit der zweiten Stütze (22-2) über eine zweite längenveränderbare Verbindungseinrichtung (42-2) verbunden ist,
wobei die erste Stütze (22-1) an einer ersten unteren Verbindungsstelle (30-1) mit der unteren Körperanbindung (18) verbunden ist und wobei die zweite Stütze (22-2) an einer zweiten unteren Verbindungsstelle (30-2) mit der unteren Körperanbindung (18) verbunden ist, wobei die untere Körperanbindung (18) derart ausgebildet ist, dass eine Relativposition von erster unterer Verbindungsstelle (30-1) und zweiter unterer Verbindungsstelle (30-2) veränderbar ist.

2. Anziehbare Hilfsvorrichtung (10) nach Anspruch 1, wobei die untere Körperanbindung (18) derart ausgebildet ist, dass ein Abstand von erster unterer Verbindungsstelle (30-1) und zweiter unterer Verbindungsstelle (30-2) veränderbar, insbesondere einstellbar, ist.

3. Anziehbare Hilfsvorrichtung (10) nach Anspruch 1 oder 2, wobei die untere Körperanbindung (18) derart ausgebildet ist, dass eine Relativposition von erster unterer Verbindungsstelle (30-1) und zweiter unterer Verbindungsstelle (30-2) veränderbar ist, insbesondere eine Position der ersten unteren Verbindungsstelle (30-1) und/oder der zweiten unteren Verbindungsstelle (30-2) bei angezogener Hilfsvorrichtung (10) lateral und medial relativ zur Medianebene (50) und/oder in Richtung anterior und in Richtung posterior relativ zur Frontalebene (52), insbesondere voneinander unabhängig, veränderbar, weiter insbesondere einstellbar, ist.

4. Anziehbare Hilfsvorrichtung (10) nach einem der vorherigen Ansprüche, wobei die erste Stütze (22-1) und die zweite Stütze (22-2) gelenkig mit der unteren Körperanbindung verbunden sind, insbesondere wobei die erste Stütze (22-1) an einer ersten unteren Verbindungsstelle (30-1) über eine erste untere Gelenkeinrichtung (48-1) mit der unteren Körperanbindung (18) verbunden ist und wobei die zweite Stütze (22-2) an einer zweiten unteren Verbindungsstelle (30-2) über eine zweite untere Gelenkeinrichtung (48-2) mit der unteren Körperanbindung (18) verbunden ist.

5. Anziehbare Hilfsvorrichtung (10) nach einem der vorherigen Ansprüche, wobei die untere Körperanbindung (18) eine untere Kraftverteilereinrichtung (58) umfasst, welche mit den Stützen (22-1, 22-2), insbesondere über die unteren Gelenkeinrichtungen (48-1, 48-2), verbunden ist, und wobei die untere Körperanbindung (18) eine mit der unteren Kraftverteilereinrichtung (58) verbundene flexible untere Körperanbindungseinrichtung (80) zur Anbindung an einen Körperbereich der Bedienperson (12) umfasst.

6. Anziehbare Hilfsvorrichtung (10) nach Anspruch 5, wobei die untere Körperanbindungseinrichtung (80) wenigstens ein Textilteil umfasst, insbesondere in Form eines Gurtes, Gurtsystems oder einer Manschette.

7. Anziehbare Hilfsvorrichtung (10) nach einem der Ansprüche 5 oder 6, wobei die untere Kraftverteilereinrichtung (58) einen unteren Grundkörper (60) aufweist, welcher sich zwischen der ersten Stütze (22-1) und der zweiten Stütze (22-2) erstreckt und an welchem die Stützen (22-1, 22-2), insbesondere über die unteren Gelenkeinrichtungen (48-1, 48-2), angeordnet sind.

8. Anziehbare Hilfsvorrichtung (10) nach Anspruch 7, wobei der untere Grundköper (60) einen ersten unteren Verstellmechanismus (64) umfasst, welcher dazu ausgebildet ist, einen Abstand der unteren Verbindungsstellen (30-1, 30-2) zu verändern, insbesondere einzustellen, weiter insbesondere die Position der unteren Verbindungsstellen (30-1, 30-2) lateral und medial relativ zur Medianebene (50) zu verändern.

9. Anziehbare Hilfsvorrichtung (10) nach einem der vorherigen Ansprüche, wobei die Stützen (22-1, 22-2), insbesondere mit den unteren Gelenkeinrichtungen (48-1, 48-2), jeweils über eine Schwenkeinrichtung (62-1, 62-2) an der unteren Körperanbindung (18), insbesondere an dem unteren Grundkörper (60), gehaltert sind, wobei die Schwenkeinrichtung (62-1, 62-2) dazu ausgebildet ist, eine Position der unteren Verbindungsstelle (30-1, 30-2) in Richtung anterior und in Richtung posterior relativ zur Frontalebene (52) zu verändern.

10. Anziehbare Hilfsvorrichtung (10) nach einem der Ansprüche 5 oder 6, wobei die untere Kraftverteilereinrichtung (58) eine erste Hüftschale (84-1) zur Anlage an einen rechten Hüftbereich der Bedienperson (12) und eine zweite Hüftschale (84-2) zur Anlage an einen linken Hüftbereich der Bedienperson (12) umfasst, wobei die erste Stütze (22-1) über die erste untere Gelenkeinrichtung (48-1) mit der ersten Hüftschale (84-1) verbunden ist und wobei die zweite Stütze (22-2) über die zweite untere Gelenkeinrichtung (48-2) mit der zweiten Hüftschale (84-2) verbunden ist, insbesondere wobei die Hüftschalen (84-1, 84-2) derart ausgebildet sind, dass bei angezogener Hilfsvorrichtung (10) die Hüftschalen (84-1, 84-2) derart ventral in einen Leistenbereich (92) der Bedienperson (12) ragen, dass nach dorsal gerichtete Kräfte über die Hüftschalen (84-1, 84-2) in den Körper der Bedienperson (12) einleitbar sind.

11. Anziehbare Hilfsvorrichtung (10) nach Anspruch 10, wobei die erste und die zweite Hüftschale (84-1, 84-2) verschiebbar an der unteren Körperanbindungseinrichtung (18), insbesondere an dem wenigstens einen Textilteil (82), gehaltert sind, insbesondere derart, dass durch Verschieben der ersten und/oder der zweiten Hüftschale (84-1, 84-2) relativ zu der unteren Körperanbindungseinrichtung (18) ein Abstand der unteren Verbindungsstellen (30-1, 30-2) relativ zueinander, insbesondere lateral und medial relativ zur Medianebene (50) und/oder in Richtung anterior und in Richtung posterior relativ zur Frontalebene (52), veränderbar, insbesondere einstellbar, ist.

12. Anziehbare Hilfsvorrichtung (10) nach einem der Ansprüche 10 oder 11, wobei die untere Kraftverteilereinrichtung (58) außerdem wenigstens eine Lordosenstütze (100) umfasst, welche über die untere Körperanbindungseinrichtung (80) mit der ersten und/oder der zweiten Hüftschale (84-1, 84-2) kraftgekoppelt ist, insbesondere wobei die wenigstens eine Lordosenstütze (100) nach cranial und/oder caudal verschiebbar an der unteren Körperanbindungseinrichtung (80), insbesondere an dem wenigstens einen Textilteil (82), gehaltert ist.

13. Anziehbare Hilfsvorrichtung (10) nach einem der vorherigen Ansprüche, wobei die erste Stütze (22-1) an einer ersten oberen Verbindungsstelle (32-1), insbesondere gelenkig, weitere insbesondere über eine erste obere Gelenkeinrichtung (106-1), mit der oberen Körperanbindung (20) verbunden ist und wobei die zweite Stütze (22-2) an einer zweiten oberen Verbindungsstelle (32-2), insbesondere gelenkig, weiter insbesondere über eine zweite obere Gelenkeinrichtung (106-2), mit der oberen Körperanbindung (20) verbunden ist.

14. Anziehbare Hilfsvorrichtung (10) nach Anspruch 13, wobei die obere Körperanbindung (20) derart ausgebildet ist, dass eine Relativposition von erster oberer Verbindungsstelle (32-1) und zweiter oberer Verbindungsstelle (32-2) veränderbar ist, insbesondere eine Position der ersten oberen Verbindungsstelle (32-1) und/oder der zweiten oberen Verbindungsstelle (32-2) bei angezogener Hilfsvorrichtung (10) lateral und medial relativ zur Medianebene (50) und/oder in Richtung anterior und in Richtung posterior relativ zur Frontalebene (52), insbesondere voneinander unabhängig, veränderbar, insbesondere einstellbar, ist.

15. Anziehbare Hilfsvorrichtung nach einem der vorherigen Ansprüche, wobei die obere und die untere Körperanbindung (18, 20) derart ausgebildet sind, dass eine Relativposition der oberen Verbindungsstellen (32-1, 32-2) und eine Relativposition der unteren Verbindungsstellen (30-1, 30-2) voneinander unabhängig veränderbar, insbesondere einstellbar, sind.

## Claims

1. Wearable aid (10) for assisting in lifting and/or holding of loads (14) by an operator (12), comprising
- a support structure (16) having a first support (22-1) and a second support (22-2), wherein the first support (22-1) and the second support (22-2) each have a back portion (24-1, 24-2) and an extension arm portion (26-1, 26-2) such that, when the aid (10) is worn by the operator (12), the back portion (24-1, 24-2) is arranged posteriorly and extends substantially along the back of the operator (12) and the extension arm portion (26- 1, 26-2) extends from posterior to anterior;
- a lower body attachment (18) for coupling the support structure (16) to a pelvic, hip and/or lumbar region of the operator (12);
- an upper body attachment (20) for coupling the support structure (16) to an upper body of the operator (12), in particular to a back, shoulder and/or chest region;
- a first hand attachment (40-1) for attachment to a right hand region or forearm region of the operator (12), wherein the first hand attachment (40-1) is connected to the first support (22-1) via a first length-adjustable connecting device (42-1);
- a second hand attachment (40-2) for attachment to a left hand region or forearm region of the operator (12), wherein the second hand attachment (40-2) is connected to the second support (22-2) via a second length-adjustable connecting device (42-2),
wherein the first support (22-1) is connected to the lower body attachment (18) at a first lower connecting point (30-1) and wherein the second support (22-2) is connected to the lower body attachment (18) at a second lower connecting point (30-2), wherein the lower body attachment (18) is designed such that a relative position of the first lower connecting point (30-1) and the second lower connecting point (30-2) can be changed.

2. Wearable aid (10) according to claim 1, wherein the lower body attachment (18) is designed such that a distance between the first lower connecting point (30-1) and the second lower connecting point (30-2) can be changed, in particular adjusted.

3. Wearable aid (10) according to claim 1 or 2, wherein the lower body attachment (18) is designed such that a relative position of the first lower connecting point (30-1) and the second lower connecting point (30-2) can be changed, in particular a position of the first lower connecting point (30-1) and/or of the second lower connecting point (30-2) can be changed, more particularly adjusted, in particular independently of one another, laterally and medially relative to the median plane (50) and/or in the anterior direction and in the posterior direction relative to the frontal plane (52), when the aid (10) is worn.

4. Wearable aid (10) according to any of the preceding claims, wherein the first support (22-1) and the second support (22-2) are connected in an articulated manner to the lower body attachment, in particular wherein the first support (22-1) is connected to the lower body attachment (18) at a first lower connecting point (30-1) via a first lower joint device (48-1) and wherein the second support (22-2) is connected to the lower body attachment (18) at a second lower connecting point (30-2) via a second lower joint device (48-2).

5. Wearable aid (10) according to any of the preceding claims, wherein the lower body attachment (18) comprises a lower force distribution device (58) which is connected to the supports (22-1, 22-2), in particular via the lower joint devices (48-1, 48-2), and wherein the lower body attachment (18) comprises a flexible lower body attachment device (80), which is connected to the lower force distribution device (58), for attachment to a body region of the operator (12).

6. Wearable aid (10) according to claim 5, wherein the lower body attachment device (80) comprises at least one textile part, in particular in the form of a belt, belt system or cuff.

7. Wearable aid (10) according to one of claims 5 or 6, wherein the lower force distribution device (58) comprises a lower main body (60) which extends between the first support (22-1) and the second support (22-2) and on which the supports (22-1, 22-2) are arranged, in particular via the lower joint devices (48-1, 48-2).

8. Wearable aid (10) according to claim 7, wherein the lower main body (60) comprises a first lower adjustment mechanism (64) which is designed to change, in particular to adjust, a distance between the lower connecting points (30-1, 30-2), more particularly to change the position of the lower connecting points (30-1, 30-2) laterally and medially relative to the median plane (50).

9. Wearable aid (10) according to any of the preceding claims, wherein the supports (22-1, 22-2), in particular together with the lower joint devices (48-1, 48-2), are each held on the lower body attachment (18), in particular on the lower main body (60), via a pivoting device (62-1, 62-2), wherein the pivoting device (62-1, 62-2) is designed to change a position of the lower connecting point (30-1, 30-2) in the anterior direction or in the posterior direction relative to the frontal plane (52).

10. Wearable aid (10) according to one of claims 5 or 6, wherein the lower force distribution device (58) comprises a first hip cup (84-1) for abutting a right hip region of the operator (12) and a second hip cup (84-2) for abutting a left hip region of the operator (12), wherein the first support (22-1) is connected to the first hip cup (84-1) via the first lower joint device (48-1) and wherein the second support (22-2) is connected to the second hip cup (84-2) via the second lower joint device (48-2), in particular wherein the hip cups (84-1, 84-2) are designed such that, when the aid (10) is worn, the hip cups (84-1, 84-2) protrude ventrally into a groin region (92) of the operator (12) such that dorsally directed forces can be introduced into the body of the operator (12) via the hip cups (84-1, 84-2).

11. Wearable aid (10) according to claim 10, wherein the first and second hip cups (84-1, 84-2) are displaceably mounted on the lower body attachment device (18), in particular on the at least one textile part (82), in particular such that by displacing the first and/or the second hip cup (84-1, 84-2) relative to the lower body attachment device (18), a distance between the lower connecting points (30-1, 30-2) can be changed, in particular adjusted, relative to one another, in particular laterally and medially relative to the median plane (50) and/or in the anterior direction and in the posterior direction relative to the frontal plane (52).

12. Wearable aid (10) according to one of claims 10 or 11, wherein the lower force distribution device (58) also comprises at least one lumbar support (100) which is force-coupled to the first and/or the second hip cup (84-1, 84-2) via the lower body attachment device (80), in particular wherein the at least one lumbar support (100) is mounted on the lower body attachment device (80), in particular on the at least one textile part (82), so as to be displaceable cranially and/or caudally.

13. Wearable aid (10) according to any of the preceding claims, wherein the first support (22-1) is connected to the upper body attachment (20) at a first upper connecting point (32-1), in particular in an articulated manner, more particularly via a first upper joint device (106-1), and wherein the second support (22-2) is connected to the upper body attachment (20) at a second upper connecting point (32-2), in particular in an articulated manner, more particularly via a second upper joint device (106-2).

14. Wearable aid (10) according to claim 13, wherein the upper body attachment (20) is designed such that a relative position of the first upper connecting point (32-1) and the second upper connecting point (32-2) can be changed, in particular a position of the first upper connecting point (32-1) and/or of the second upper connecting point (32-2) can be changed, in particular adjusted, in particular independently of one another, laterally and medially relative to the median plane (50) and/or in the anterior direction and in the posterior direction relative to the frontal plane (52) when the aid (10) is worn.

15. Wearable aid according to any of the preceding claims, wherein the upper and the lower body attachment (18, 20) are designed such that a relative position of the upper connecting points (32-1, 32-2) and a relative position of the lower connecting points (30-1, 30-2) can be changed, in particular adjusted, independently of one another.

## Revendications

1. Dispositif d'aide (10) mettable destiné à supporter le levage et/ou le maintien de charges (14) par un opérateur (12), comprenant
- une structure de support (16) avec un premier support (22-1) et un deuxième support (22-2), dans lequel le premier support (22-1) et le deuxième support (22-2) présentent chacun une section dorsale (24 -1, 24-2) et une section de flèche (26-1, 26-2) de telle sorte que, lorsque le dispositif d'aide (10) est mis par l'opérateur (12), la section dorsale (24-1, 24-2) est disposée en arrière et s'étend pour l'essentiel le long de la partie de dos de l'opérateur (12) et la section de flèche (26-1, 26-2) s'étend de l'arrière vers l'avant;
- une attache inférieure au corps (18) pour coupler la structure de support (16) à une zone pelvienne, de la hanche et/ou lombaire de l'opérateur (12);
- une attache supérieure au corps (20) pour coupler la structure de support (16) à un haut du corps de l'opérateur (12), en particulier à une zone du dos, des épaules et/ou de la poitrine;
- une première attache à la main (40-1) pour être attachée à une zone de la main droite ou de l'avant-bras droit de l'opérateur (12), dans lequel la première attache à la main (40-1) est reliée au premier support (22-1) par le biais d'un premier dispositif de liaison (42-1) réglable en longueur;
- une deuxième attache à la main (40-2) pour être attachée à une zone de la main gauche ou de l'avant-bras gauche de l'opérateur (12), dans lequel la deuxième attache à la main (40-2) est reliée au deuxième support (22-2) par le biais d'un deuxième dispositif de liaison (42-2) réglable en longueur,
dans lequel le premier support (22-1) est relié à l'attache inférieure au corps (18) au niveau d'un premier point de liaison inférieur (30-1) et dans lequel le deuxième support (22-2) est relié à l'attache inférieure au corps (18) au niveau d'un deuxième point de liaison inférieur (30-2), dans lequel l'attache inférieure au corps (18) est conçue de telle sorte qu'une position relative du premier point de liaison inférieur (30-1) et du deuxième point de liaison inférieur (30-2) peut être modifiée.

2. Dispositif d'aide (10) mettable selon la revendication 1, dans lequel l'attache inférieure au corps (18) est conçue de telle sorte qu'une distance séparant le premier point de liaison inférieur (30-1) et le deuxième point de liaison inférieur (30-2) est modifiable, en particulier réglable.

3. Dispositif d'aide (10) mettable selon la revendication 1 ou 2, dans lequel l'attache inférieure au corps (18) est conçue de telle sorte qu'une position relative du premier point de liaison inférieur (30-1) et du deuxième point de liaison inférieur (30- 2) est modifiable, en particulier une position du premier point de liaison inférieur (30-1) et/ou du deuxième point de liaison inférieur (30-2), lorsque le dispositif d'aide (10) est mis, peut être modifiée, en outre en particulier réglée, latéralement et médialement par rapport au plan médian (50) et/ou en direction antérieure et en direction postérieure par rapport au plan frontal (52), en particulier de manière indépendante l'une de l'autre.

4. Dispositif d'aide (10) mettable selon l'une quelconque des revendications précédentes, dans lequel le premier support (22-1) et le deuxième support (22-2) sont reliés de manière articulée à l'attache inférieure au corps, en particulier dans lequel le premier support (22-1) est relié au niveau d'un premier point de liaison inférieur (30-1), via un premier dispositif d'articulation inférieur (48-1), à l'attache inférieure au corps (18), et dans lequel le deuxième support (22-2) est relié au niveau d'un deuxième point de liaison inférieur (30-2), via un deuxième dispositif d'articulation inférieur (48-2), à l'attache inférieure au corps (18).

5. Dispositif d'aide (10) mettable selon l'une quelconque des revendications précédentes, dans lequel l'attache inférieure au corps (18) comprend un dispositif inférieur de répartition de force (58) qui est relié aux supports (22-1, 22-2), en particulier par l'intermédiaire des dispositifs d'articulation inférieurs (48-1, 48-2), et dans lequel l'attache inférieure au corps (18) comprend un dispositif inférieur flexible d'attache au corps (80) qui est relié au dispositif de répartition de force inférieur (58) et destiné à être attaché à une zone du corps de l'opérateur (12).

6. Dispositif d'aide (10) mettable selon la revendication 5, dans lequel le dispositif inférieur d'attache au corps (80) comprend au moins une partie textile, en particulier sous la forme d'une ceinture, d'un système de ceinture ou d'une manchette.

7. Dispositif d'aide (10) mettable selon l'une quelconque des revendications 5 ou 6, dans lequel le dispositif inférieur de répartition de force (58) présente un corps de base inférieur (60) qui s'étend entre le premier support (22-1) et le deuxième support (22-2) et sur lequel sont disposés les supports (22-1, 22-2), en particulier par l'intermédiaire des dispositifs d'articulation inférieurs (48-1, 48-2).

8. Dispositif d'aide (10) mettable selon la revendication 7, dans lequel le corps de base inférieur (60) comprend un premier mécanisme inférieur de réglage (64) qui est conçu pour modifier, en particulier régler, une distance séparant les points de liaison inférieurs (30-1, 30- 2), en outre en particulier pour modifier la position des points de liaison inférieurs (30-1, 30-2) latéralement et médialement par rapport au plan médian (50) .

9. Dispositif d'aide (10) mettable selon l'une quelconque des revendications précédentes, dans lequel les supports (22-1, 22-2), en particulier avec les dispositifs d'articulation inférieurs (48-1, 48-2), sont maintenus chacun par un dispositif de pivotement (62-1, 62-2) sur l'attache inférieure au corps (18), en particulier sur le corps de base inférieur (60), dans lequel ledit dispositif de pivotement (62-1, 62-2) est conçu pour modifier une position du point de liaison inférieur (30-1, 30-2) en direction antérieure et en direction postérieure par rapport au plan frontal (52).

10. Dispositif d'aide (10) mettable selon l'une quelconque des revendications 5 ou 6, dans lequel le dispositif de répartition de force inférieur (58) comprend une première coque de hanche (84-1) destinée à être en appui sur une zone de hanche droite de l'opérateur (12) et une deuxième coque de hanche (84-2) destinée à être en appui sur une zone de hanche gauche de l'opérateur (12), dans lequel le premier support (22-1) est relié à la première coque de hanche (84-1) par l'intermédiaire du premier dispositif d'articulation inférieur (48-1) et dans lequel le deuxième support (22-2) est relié à la deuxième coque de hanche (84-2) par l'intermédiaire du deuxième dispositif d'articulation inférieur (48-2), en particulier dans lequel les coques de hanche (84 -1, 84-2) sont conçues de telle sorte que, lorsque le dispositif d'aide (10) est mis, les coques de hanche (84-1, 84-2) font saillie de manière ventrale dans une zone de l'aine (92) de l'opérateur (12) de telle manière que des forces dirigées vers le dos peuvent être appliquées par les coques de hanche (84-1, 84-2) au corps de l'opérateur (12).

11. Dispositif d'aide (10) mettable selon la revendication 10, dans lequel les première et deuxième coques de hanche (84-1, 84-2) sont maintenues de manière coulissante sur le dispositif inférieur d'attache au corps (18), en particulier sur ladite au moins une partie textile (82), en particulier de telle manière que, en déplaçant la première et/ou la deuxième coque de hanche (84-1, 84-2) par rapport au dispositif inférieur d'attache au corps (18), une distance séparant les points de liaison inférieurs (30-1, 30-2) l'un par rapport à l'autre, peut être modifiée, en particulier réglée, notamment latéralement et médialement par rapport au plan médian (50) et/ou en direction antérieure et en direction postérieure par rapport au plan frontal (52).

12. Dispositif d'aide (10) mettable selon l'une quelconque des revendications 10 ou 11, dans lequel le dispositif de répartition de force inférieur (58) comprend en outre au moins un support lombaire (100) qui est couplé par force via le dispositif inférieur d'attache au corps (80) à la première et/ou la deuxième coque de hanche (84-1, 84-2), en particulier dans lequel ledit au moins un support lombaire (100) est maintenu sur le dispositif inférieur d'attache au corps (80), en particulier sur ladite au moins une partie textile (82), de manière à être crânialement et/ou caudalement déplaçable.

13. Dispositif d'aide (10) mettable selon l'une quelconque des revendications précédentes, dans lequel le premier support (22-1) est relié au niveau d'un premier point de liaison supérieur (32-1), en particulier de manière articulée, en outre en particulier via un premier dispositif d'articulation supérieur (106-1), à l'attache supérieure au corps (20), et dans lequel le deuxième support (22-2) est relié au niveau d'un deuxième point de liaison supérieur (32-2), en particulier de manière articulée, en outre en particulier via un deuxième dispositif d'articulation supérieur (106-2), à l'attache supérieure au corps (20)

14. Dispositif d'aide (10) mettable selon la revendication 13, dans lequel l'attache supérieure au corps (20) est conçue de telle sorte qu'une position relative du premier point de liaison supérieur (32-1) et du deuxième point de liaison supérieur (32-2) est modifiable, en particulier une position du premier point de liaison supérieur (32-1) et/ou du deuxième point de liaison supérieur (32-2), lorsque le dispositif d'aide (10) est mis, peut être modifiée, en particulier réglée, latéralement et médialement par rapport au plan médian (50) et/ou en direction antérieure et en direction postérieure par rapport au plan frontal (52), en particulier de manière indépendante l'une de l'autre.

15. Dispositif d'aide mettable selon l'une quelconque des revendications précédentes, dans lequel les attaches supérieure et inférieure au corps (18, 20) sont conçues de telle sorte qu'une position relative des points de liaison supérieurs (32-1, 32-2) et une position relative des points de liaison inférieurs (30-1, 30-2) peuvent être modifiées, en particulier réglées, indépendamment l'une de l'autre.
